(19)

Europäisches
Patentamt
European
Patent Office
Office européen
des brevets

(11) **EP 1 857 773 A1**

(12) **EUROPEAN PATENT APPLICATION**
published in accordance with Art. 158(3) EPC

(43) Date of publication:
**21.11.2007 Bulletin 2007/47**

(51) Int Cl.:
*G01B 11/24* (2006.01)    *G01N 21/896* (2006.01)

(21) Application number: **06713147.4**

(22) Date of filing: **06.02.2006**

(86) International application number:
**PCT/JP2006/302004**

(87) International publication number:
**WO 2006/095519 (14.09.2006 Gazette 2006/37)**

(84) Designated Contracting States:
**DE FR**

(30) Priority: **07.03.2005 JP 2005062726**

(71) Applicant: **Nippon Sheet Glass Company Limited
Tokyo 108-6321 (JP)**

(72) Inventor: **MATSUSHITA, Yoshimitsu
an 2-Chome, Minato-ku, Tokyo, 1058552 (JP)**

(74) Representative: **Viering, Jentschura & Partner
Grillparzerstrasse 14
81675 München (DE)**

(54) **PERSPECTIVE DISTORTION INSPECTING EQUIPMENT AND METHOD OF TRANSLUCENT PANEL**

(57)    Perspective distortion inspecting equipment (1) comprising an LED plate (3), a CCD camera (4), and a computer (6). The LED plate has a plurality of target marks (T) inclining at 45 degrees. Under a state where a panel (2) is arranged between the LED plate and the CCD camera, the computer lights the target marks one by one and the lighted target mark is photographed by the CCD camera. The computer calculates a perspective distortion (R) based on the distance between a virtual line (K) connecting the images on the LED at the opposite ends of each target mark and the image of the LED located in the middle of the target mark.

**Fig. 1**

## Description

TECHNICAL FIELD

The present invention relates to an apparatus and a method for inspecting transmitted optical distortion in an optical transparent panel.

BACKGROUND ART

Windows for recent automobiles use optical transparent glass panels having complex curved shapes to satisfy demands for improving aerodynamic characteristics. The driver of the automobile sees a landscape or an object outside the automobile through the glass panel. The landscape or the object seen through a curved portion of the glass panel is distorted depending on the curved level of the curved portion. This distortion is referred to as a transmitted optical distortion. When the transmitted optical distortion becomes a tolerable value or more, the driver will be distracted by the distortion.

For this reason, the curved level of the glass panel, that is, the transmitted optical distortion, at various positions on the glass panel is quantitatively inspected before the glass panel is installed in the window of an automobile. A first prior art inspection method uses a zebra board having a pattern of stripes that are inclined at an angle of 45 degrees (refer to non-patent publication 1).

The first prior art inspection method will now be described. A glass panel is first arranged between the zebra board and a screen. The stripe pattern of the zebra board optically projected onto the screen through the glass panel is then inspected. Further, the stripe pattern of the zebra board optically projected directly onto the screen and not through the glass panel is also inspected. A change in the stripe pattern of the zebra board generated through the glass panel is measured. For example, the interval of the stripes of the stripe pattern is measured with a ruler to quantitatively detect the transmitted optical distortion. However, this prior art method is problematic in that it requires manpower and time for the measurement.

A second prior art inspection method using a display device including a plurality of light emitting diodes (LEDs) arranged at intersecting points of an orthogonal grid has been proposed (patent publication 1). The method of patent publication 1 will now be described. A glass panel is first installed on an automobile, the display device is arranged in front of the glass panel, and a camera is arranged behind the glass panel at an eyepoint of a driver. Three of the LEDs on the display device that are arranged on lines orthogonal to one another are illuminated one after another. The three LEDs are imaged with the camera. The positions of the LEDs imaged through the glass panel are compared with the positions of the LEDs imaged without the glass panel. A lateral distortion angle corresponding to deviations in the positions of the LEDs in the lateral direction of the LEDs and a vertical distortion angle corresponding to deviations in the positions of the LEDs in the vertical direction are calculated. The transmitted optical distortion is quantitatively determined through a calculation based on the two distortion angles.

The calculation of the transmitted optical distortion and the illumination of the LEDs are automatically controlled by a computer. Thus, the second prior art method reduces the required manpower and shortens the measurement time as compared with the first prior art method using the zebra board.
[Non-Patent Publication 1] DIN 52305
[Patent Publication 1] Japanese Patent No. 3083641

DISCLOSURE OF THE INVENTION

However, the second prior art method uses a complex determination formula to obtain the transmitted optical distortion from the lateral distortion angle and the vertical distortion angle. Thus, the determination requires a long time for calculation and complicates the structure of a transmitted optical distortion inspection apparatus.

It is an object of the present invention to provide a transmitted optical distortion detection apparatus and an inspection method for easily and readily detecting a transmitted optical distortion.

One aspect of the present invention provides a transmitted optical distortion inspection apparatus for detecting transmitted optical distortion in a plurality of small regions defined on an optical transparent panel. The apparatus has a display device including a plurality of target marks spaced from one another by an equal interval, with each target mark being formed by a plurality of light emitting points arranged along a straight line. The display device sequentially illuminates each target mark. An imaging device tracks an illuminated one of the target marks and captures an image of the illuminated target mark. An image processing device processes the image captured by the imaging device. A calculation device calculates a transmitted optical distortion degree of the panel from an image of each target mark captured without through the panel and an image of each target mark through the panel based on differences between imaging positions of each light emitting point.

The plurality of light emitting points forming each target mark are three light emitting diodes arranged along the straight line in one embodiment and two light emitting diodes arranged along the straight line in another embodiment. In one embodiment, the plurality of light emitting points forming each target mark are arranged along a straight line inclined at an angle of 45 degrees. In one embodiment, the panel is pivotally supported about the imaging device. In one embodiment, the panel is maintained in a state about orthogonal to an optical axis of the imaging device and supported to be movable in a direction intersecting the optical axis. In one embodiment, the panel is maintained in a state inclined relative to an optical axis of the imaging device and supported to be movable in a direction intersecting the optical axis. In one embodiment, the panel is a glass panel for an automobile, and the imaging device is arranged at a position corresponding to an eyepoint of a driver of the automobile. It is preferable that the image processing device includes a conversion means for converting into a center of gravity coordinates with an image of each light emitting point. In one embodiment, each light emitting point is a light emitting diode.

Another aspect of the present invention provides a transmitted optical distortion inspection method for detecting a transmitted optical distortion in a plurality of small regions defined on an optical transparent panel. The method includes a step of sequentially illuminating a plurality of target marks spaced from one another by an equal interval, with each target mark being formed by a plurality of light emitting points arranged along a straight line; a first imaging step of imaging an illuminated target mark through the panel; a second imaging step of imaging an illuminated target mark without through the panel; an image processing step of processing each of the images captured in the first and second imaging steps; and a calculation step of comparing an imaging position of each light emitting point in each target mark imaged without through the panel and an imaging position of each light emitting point in each target mark imaged through the panel to calculate the transmitted optical distortion from a difference between the imaging positions of the light emitting points.

A further aspect of the present invention provides a transmitted optical distortion inspection apparatus for detecting a transmitted optical distortion in an optical transparent panel. The apparatus has a display device, including a plurality of diagonal target marks, for selectively illuminating the target marks. Each of the target marks is formed by a plurality of light emitting points arranged at a constant pitch along a straight line. An imaging device images an illuminated one of the target marks and generates an image signal. A table holds the optical transparent panel between the display device and the imaging device. An image processing device processes the image signal and determines the position of each light emitting point in an image of each target mark. A computer calculates, based on the position of each light emitting point, distance from a hypothetical straight line linking images of light emitting points arranged at two ends of each target mark to an image of a light emitting point located between the light emitting points arranged at the two ends, and calculates a transmitted optical distortion degree based on the distance.

In one embodiment, each illuminated light emitting point is imaged as a circular or oval light emitting region. The image processing device calculates a center of gravity position of an image of each light emitting point in an image of each target mark. The computer calculates the distance from a hypothetical straight line linking center of gravity positions of images of light emitting points arranged at two ends of each target mark to a center of gravity position of an image of a light emitting point located between the light emitting points arranged at the two ends to calculate the transmitted optical distortion degree based on the distance.

In one embodiment, the computer calculates the transmitted optical distortion degree of the panel using the formula $R = S / Ao$, where R represents transmitted optical distortion amount, S represents said distance, and Ao represents distance between the center of gravity positions of the light emitting points arranged at the two ends. In one embodiment, the panel includes a plurality of small regions, the computer includes a memory storing a threshold set for each small region, and the computer determines whether a transmitted optical distortion amount and a transmitted optical distortion at each measurement point are the threshold or less. In one embodiment, the transmitted optical distortion inspection apparatus further has motors for respectively moving the imaging device and the table in a manner that a line linking the imaging device and the display device extends through various positions on the optical transparent panel. In one embodiment, the optical transparent panel includes a curved portion, and the transmitted optical distortion inspection apparatus inspects for transmitted optical distortion of the curved portion.

BRIEF DESCRIPTION OF THE DRAWINGS

Fig. 1 is a perspective view of a transmitted optical distortion inspection apparatus according to a preferred embodiment of the present invention;
Fig. 2 shows observation zones defined on a glass panel;
Figs. 3A and 3B are a front view and an enlarged view of an LED board, respectively;
Fig. 4 is a block diagram of the transmitted optical distortion inspection apparatus of Fig. 1;
Fig. 5A shows an image of three LEDs imaged without through the glass panel, and Fig. 5B shows an image of the three LEDs imaged through the glass panel;
Fig. 6 is a schematic diagram describing a unit length Ao and a deviation amount S;
Fig. 7 is a schematic diagram showing the arrangement and the operation of a transmitted optical distortion inspection apparatus in another example;
Fig. 8 is a schematic diagram showing the arrangement and the operation of a transmitted optical distortion inspection apparatus in another example;
Fig. 9A shows an image of two LEDs imaged without through a glass panel, and Fig. 9B shows an image of the two LEDs imaged through the glass panel; and
Fig. 10 is a schematic diagram describing a deviation amount S of Fig. 9.

BEST MODE FOR CARRYING OUT THE INVENTION

A transmitted optical distortion inspection apparatus according to a preferred embodiment of the present invention will now be described.

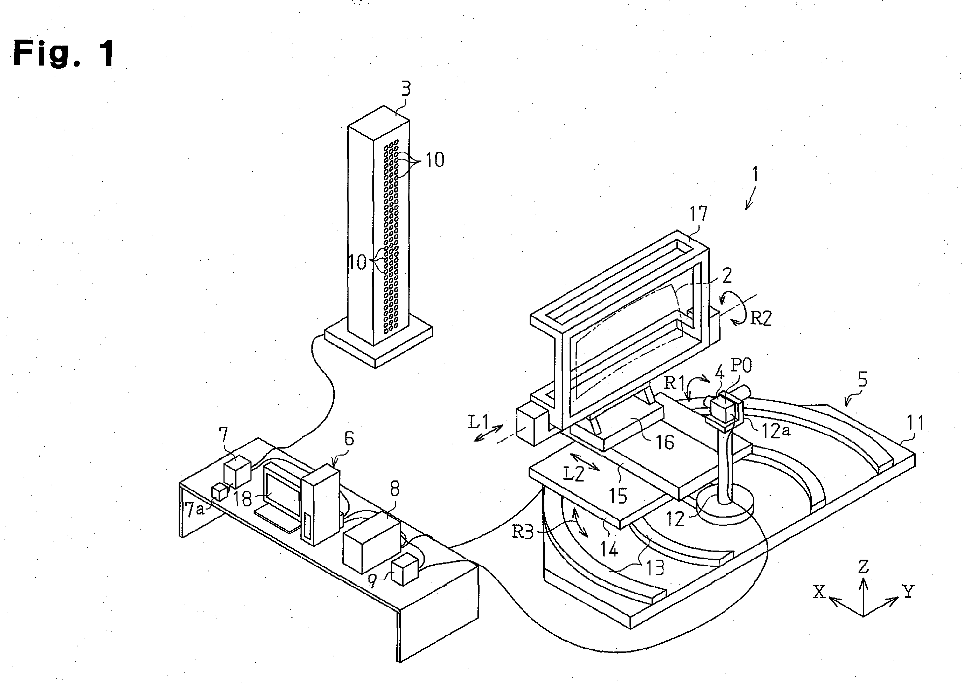

Fig. 1 shows a transmitted optical distortion inspection apparatus 1 for detecting transmitted optical distortion in an optical transparent panel 2. An example of the optical transparent panel 2 is a curved glass panel, such as a windshield of an automobile. The transmitted optical distortion inspection apparatus 1 includes an LED board 3 serving as a display device, a CCD camera 4 serving as an imaging device, a table 5, a computer 6, an LED display control unit 7, a positioning control unit 8, and an image processing device 9. The glass panel 2 is arranged between the CCD camera 4 and the LED board 3. The CCD camera 4 directly images LEDs 10 of the LED board 3 or indirectly images the LEDs 10 of the LED board 3 through the glass panel 2.

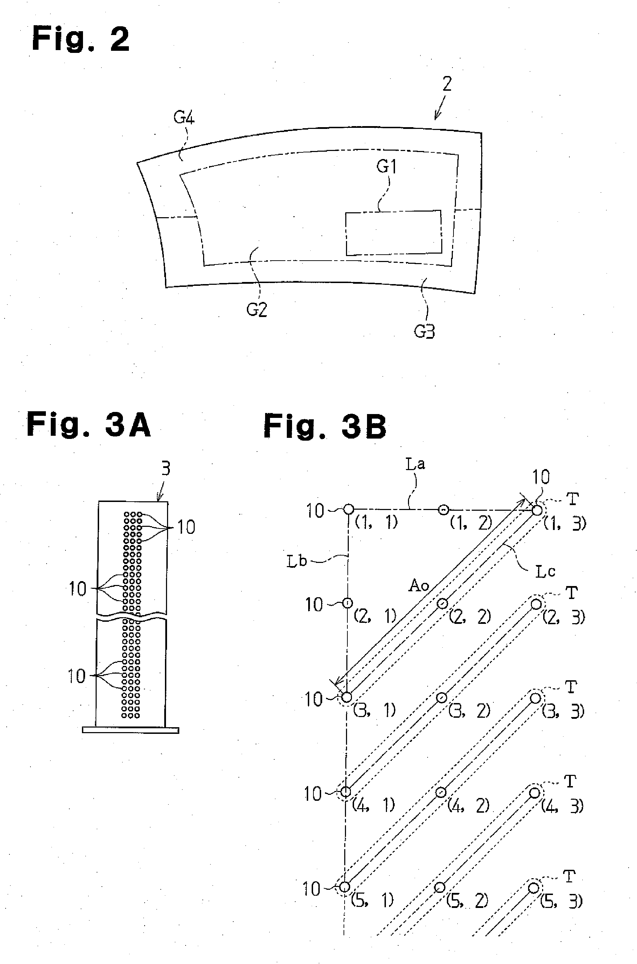

Fig. 2 shows the glass panel 2 as viewed from an eyepoint P0 of the driver (refer to Fig. 1). The glass panel 2 is divided into a plurality of small regions, or four observation zones G1, G2, G3, and G4. The four observation zones G1 to G4 are inspection regions described in a published document (TOYOTA Technical Review Vol.43, extra edition, July 1993) and are defined in accordance with the view frequency at which the driver sees objects. For example, the observation zones G1, G2, G3, and G4 have different minimum transmitted optical distortion values at which the driver starts to be distracted when the driver sees an object through the glass panel 2. The first observation zone G1 faces the eyepoint P0 of the driver and is a region used most frequently when the driver sees the front. The second observation zone G2 surrounds the first observation zone G1 and is a region used when the driver sees an overall view of the front. The third observation zone G3 is a region surrounding a lower half of the second observation zone G2. The fourth observation zone G4 is a region surrounding an upper half of the second observation zone G2. The observation zones G1 to G4 have different transmitted optical distortion thresholds set in accordance with the minimum distortion at which the driver starts being distracted by the distortion. The transmitted optical distortion threshold set for the first observation zone G1 is smaller than the thresholds set for the other zones, that is, the second, third, and fourth observation zones G2, G3, and G4. The thresholds become larger in the order of the thresholds of the second observation zone G2, the third observation zone G3, and the fourth observation zone G4. More specifically, the transmitted optical distortion threshold, that is, the maximum tolerance, of the first observation zone G1 is set to be smaller than the thresholds of the other zones, or the observation zones G2 to G4, because the first observation zone G1 is a region most frequently used to check the traveling direction of the automobile.

As shown in Fig. 3A, the LED board 3 includes an LED array including a plurality of LEDs 10 functioning as light emitting elements arranged at intersecting points of an orthogonal grid. In the preferred embodiment, the LED array includes four hundred and fifty LEDs 10 with three LEDs 10 arranged in the lateral direction (Y-direction) and many (one hundred and fifty in the preferred embodiment) LEDs 10 arranged in the vertical direction (Z-direction).

As shown in Fig. 3B, three LEDs 10 are arranged along a horizontal line, or lateral line La, at equal intervals. One hundred and fifty LEDs 10 are arranged along a vertical line, or a vertical line Lb, at equal intervals. Since the LEDs 10 are arranged at intersecting points of the orthogonal grid, the lateral line La and the vertical line Lb are orthogonal to each other. An inclined straight line Lc intersects with the lateral line La and the vertical line Lb at an angle of 45 degrees. Three LEDs 10 are arranged at equal intervals on the straight line Lc. The three LEDS 10 on the straight line Lc form a single target mark T. As a result, the LED board 3 includes a plurality of target marks T that are arranged parallel to each other at a constant pitch in the Z-direction.

In the preferred embodiment, the quantity of the rows of the LEDs 10 (in the Z-direction) is one to one hundred and fifty and the quantity of the columns of the LEDs 10 (in the Y-direction) is one to three. The coordinates of the LEDs 10 will now be described. Hereafter, the position of each LED 10 is expressed using coordinates (row number, column number). The row number and the column number both start from one. For example, in the highest row (first row), the LED 10 arranged in the left column is expressed by coordinates (1, 1), the LED 10 arranged in the middle column is expressed by coordinates (1, 2), and the LED 10 arranged in the right column is expressed by coordinates (1, 3). In the second row, the LED 10 arranged in the left column is expressed by (2, 1), the LED 10 arranged in the middle column is expressed by (2, 2), and the LED 10 arranged in the right column is expressed by (2, 3). In the n-th row, the LED 10 arranged in the left column is expressed by (n, 1), the LED 10 arranged in the middle column is expressed by (n, 2), and the LED 10 arranged in the right column is expressed by (n, 3).

Accordingly, the three LEDs 10 at coordinates (1, 3), (2, 2), and (3, 1) form a target mark T. The three LEDs 10 at coordinates (2, 3), (3, 2), and (4, 1) form another target mark T and so on. In the same way, the three LEDs 10 arranged at coordinates (148, 3), (149, 2), and (150, 1) form a further target mark T. Unit length Ao indicates the distance between the two LEDs 10 that are arranged at the two ends of each target mark T.

The CCD camera 4 is arranged at the eyepoint P0. The CCD camera 4 is arranged in a manner that the CCD camera 4 is capable of tracking and imaging an illuminated target mark K through each of the first to fourth observation zones G1 to G4.

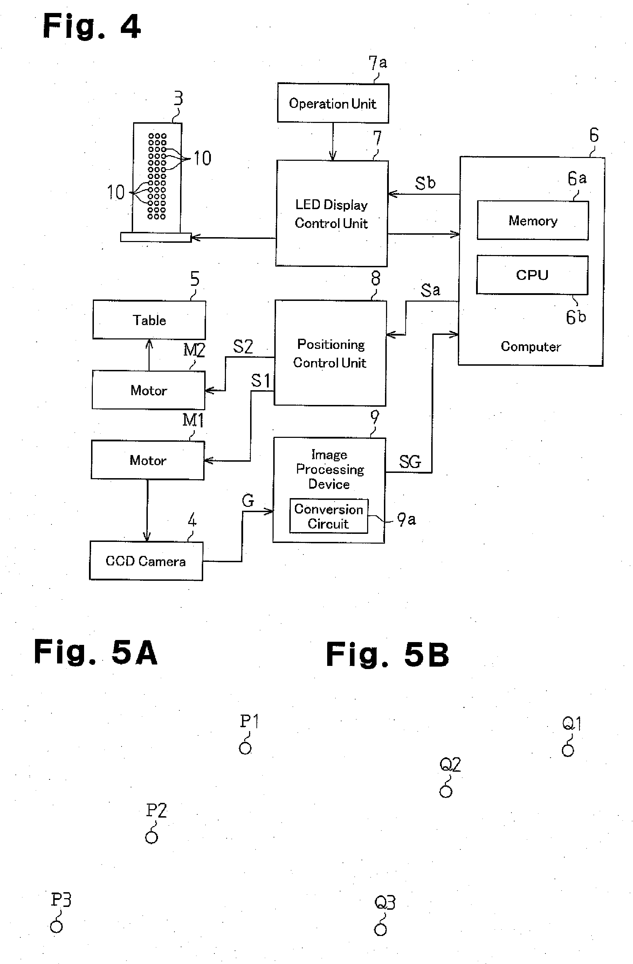

As shown in Fig. 1, the table 5 includes a common base 11 and a camera platform 12 erected on the upper surface of the common base 11. The camera platform 12 has a distal end (imaging device supporting point) on which a swivel mechanism 12a is mounted. The swivel mechanism 12a includes a worm gear, which is not shown, and a motor M1 (refer to Fig. 4) for driving and rotating the worm gear. The CCD camera 4, which is supported on the camera platform 12, is driven by the swivel mechanism 12a. The swivel mechanism 12a pivots the CCD camera 4 about the Y-axis as indicated by arrow R1 when the motor M1 is provided with a drive signal and the motor M1 is driven to control rotation of the worm gear.

Two rails 13 are formed on the upper surface of the common base 11, which are concentric about the camera platform 12. A swing frame 14 having rollers (not shown) is arranged on the rails 13. A variable angle mechanism including a worm gear, which is not shown, and a motor M2 (refer to Fig. 4) is arranged on the common base 11. The motor M2 drives the worm gear so that the rollers roll along the rails 13. As a result, the swing frame 14 pivots about the camera platform 12 along the rails 13 as indicated by arrow R3.

The table 5 includes a Y-movement frame 15 arranged on the swing frame 14 and an X-movement frame 16 arranged on the Y-movement frame 15. The Y-movement frame 15 adjusts the position of the glass panel 2 in the Y-direction with respect to a line linking the CCD camera 4 and the LED board 3, that is, the optical axis of the CCD camera 4. For example, the Y-movement frame 15 is driven by a screw feeding mechanism, which is not shown, arranged on the swing frame 14. A Y-adjustment handle (not shown) is turned to rotate the screw feeding mechanism and linearly move the Y-movement frame 15 with respect to the swing frame 14 along an axis indicated by arrow L1.

The X-movement frame 16 adjusts the position of the glass panel 2 in the X-direction with respect to the line linking the CCD camera 4 and the LED board 3. For example, the X-movement frame 16 is driven by a screw feeding mechanism, which is not shown, arranged on the Y-movement frame 15. An X-adjustment handle is turned to rotate the screw feeding mechanism and linearly move the X-movement frame 16 along the axis indicated by arrow L2 with respect to the swing frame 14.

The table 5 includes a panel holding frame 17 arranged on the X-movement frame 16. The panel holding frame 17 includes a variable angle mechanism, which is not shown, and an angle adjustment handle. The angle adjustment handle is rotated in a predetermined direction to rotate the panel holding frame 17 about an axis L1 as indicated by arrow R2. The panel holding frame 17 has a holding member, which is not shown. The glass panel 2 is held by the holding member so that the glass panel 2 is fixed to the panel holding frame 17 and moved integrally with the panel holding frame 17.

The swivel mechanism 12a, the swing frame 14, the Y-movement frame 15, the X-movement frame 16, and the panel holding frame 17, which are included in the table 5, are moved so as to change the relative positions of the CCD camera 4, the LEDs 10, and the glass panel 2. As a result, the CCD camera 4 scans the glass panel 2 and the LED board 3.

As shown in Fig. 1, the computer 6 is electrically connected to the LED display control unit 7, the positioning control unit 8, and the image processing device 9. The computer 6 is electrically connected to a monitor 18. The computer 16 calculates the transmitted optical distortion and displays the calculation result on the monitor 18.

As shown in Fig. 4, the computer 6 includes a memory 6a, which stores preset thresholds of the observation zones G1 to G4, and a CPU 6b, which serves as a calculator for executing a distortion calculation program code to calculate the transmitted optical distortion. The memory 6a may store the distortion calculation program code and data. The computer 6 generates a timing signal Sa in accordance with the program code stored in the memory 6a and provides the positioning control unit 8 with the timing signal Sa.

The positioning control unit 8 generates first and second drive signals S1 and S2 in accordance with the timing signal Sa and provides the motor M1 in the swivel mechanism 12a with the first drive signal S1 and the motor M2 in the variable angle mechanism of the swing frame 14 with the second drive signal S2. The motors M1 and M2 are respectively operated in accordance with the first drive signal S1 and the second drive signal S2.

The motor M1 pivots the swivel mechanism 12a about the Y-axis in accordance with the first drive signal S1 in a manner that the CCD camera 4 images the LED board 3 from the upper side to the lower side. The motor M2 pivots the variable angle mechanism about the Z-axis in accordance with the second drive signal S2. In detail, the motor M2 pivots the swing frame 14 (the glass panel 2) about the Z-axis by a predetermined angle when the swivel mechanism 12a moves and orients the CCD camera 4 toward the LEDs 10 in the lowest row (150th row). Subsequently, the motor M1 pivots the swivel mechanism 12a about the Y-axis until the CCD camera 4 is oriented toward the LEDs 10 in the highest row (first row) and then pivots the swivel mechanism 12a about the Y-axis so that the CCD camera 4 sequentially images the LED board 3 from the upper side to the lower side.

The computer 6 generates a start signal Sb for starting control that turns each LED 10 on and off in accordance with the program code stored in the memory 6a and provides the LED display control unit 7 with the start signal Sb.

The LED display control unit 7 includes an operation unit 7a. The operation unit 7a includes a first switch, which switches the LED board 3 between on and off states, and a second switch, which switches the one that controls the illumination of the LEDs 10 between the computer 6 and the operation unit 7a. When the second switch of the operation unit 7a is switched so that the computer 6 controls illumination of the LEDs 10 and the computer 6 provides the LED display control unit 7 with the start signal Sb, the LED display control unit 7 starts selectively turning on the LEDs 10. In response to the start signal Sb, the LED display control unit 7 first selects one target mark T formed by the set of LEDs 10 located at coordinates (1, 3), (2, 3), and (3, 1) (refer to Fig. 3B) and selectively supplies only the LEDs 10 of the selected target mark T with driving power. The LEDs 10 that have not been selected remain in a state turned off.

Next, the LED display control unit 7 selects one diagonal target mark T formed by the set of LEDs 10 located at coordinates (2, 3), (3, 2), and (4, 1) and selectively supplies only the LEDs 10 of the selected target mark T with driving power. The LEDs 10 that have not been selected remain in a state turned off.

Afterwards, the LED display control unit 7 selects one diagonal target mark T formed by the set of LEDs 10 located at coordinates (3, 3), (4, 2), and (5, 1) and selectively supplies only the LEDs 10 of the selected target mark T with driving power. The LEDs 10 that have not been selected remain in a state turned off.

In the same manner, the LED display control unit 7 thereafter illuminates the diagonal target marks T extending along straight lines Lc one by one.

An image of each LED 10 is captured by the CCD camera 4. As shown in Fig. 4, the CCD camera 4 provides the image processing device 9 with an image signal G. The image processing device 9 generates a processed image signal SG including information indicating the position of an image (imaging position) of each LED 10 based on the image signal G and provides the computer 6 with the processed image signal SG.

The image processing device 9 includes a conversion circuit 9a, which functions as a conversion means for converting the coordinates of an illuminated LED 10 into a center of gravity coordinates. The conversion circuit 9a may be realized by software, such as a conversion program code. The center of gravity coordinates of the illuminated LED 10 will now be described. An image of each illuminated LED 10 forms a light-emitting region having brightness exceeding a fixed level. The center of gravity coordinates of each LED 10 indicate the center of the graphics showing the light-emitting region of the image of the LED 10. For example, when the light-emitting region of the image of the LED 10 is oval, the coordinates indicating the center of the light-emitting region are not used. The center of gravity coordinates of the light-emitting region of the oval shape are used to indicate the imaging position of the LED 10. The image processing device 9 generates a processed image signal SG indicating the imaging position of the LED 10 resulting from conversion performed by the conversion circuit 9a and provides the computer 6 with the processed image signal SG. The computer 6 calculates the transmitted optical distortion of the observation zones G1 to G4 associated with that image based on the processed image signal SG in accordance with the distortion calculation program code stored in the memory 6a.

The computer 6 illuminates a predetermined target mark T, that is, three LEDs 10 arranged along a straight line Lc, by controlling the LED display control unit 7. The CCD camera 4 is moved and oriented toward the target mark T by the positioning control unit 8 to capture an image of each of the three LEDs 10 of the target mark T. Whenever the CCD camera 4 captures an image of an LED 10, the CCD camera 4 provides an image signal G to the image processing device 9, and the image processing device 9 provides a processed image signal SG to the computer 6. As a result, the computer 6 calculates the transmitted optical distortion degree (also referred to as transmitted optical distortion amount).

The calculation of the transmitted optical distortion amount will now be described. Fig. 5A shows an image of three LEDs 10 at coordinates (1, 3), (2, 2), and (3, 1) (target mark T) captured by the CCD camera 4 without through the glass panel 2. The coordinates of the LEDs 10 are converted into their center of gravity coordinates by the conversion circuit 9a. This image includes captured images P1, P2, and P3. The captured images P1, P2, and P3 are images of the three LEDs 10 respectively located at coordinates (1, 3), (2, 2), and (3, 1) shown in Fig. 3B.

Fig. 5B shows an image of three LEDs 10 at coordinates (1, 3), (2, 2), and (3, 1) (target mark T) captured by the CCD camera 4 through the glass panel 2. The coordinates of the LEDs 10 are converted into their center of gravity coordinates by the conversion circuit 9a. This image includes captured images Q1, Q2, and Q3. The captured images Q1, Q2, and Q3 respectively correspond to the captured images P1, P2, and P3.

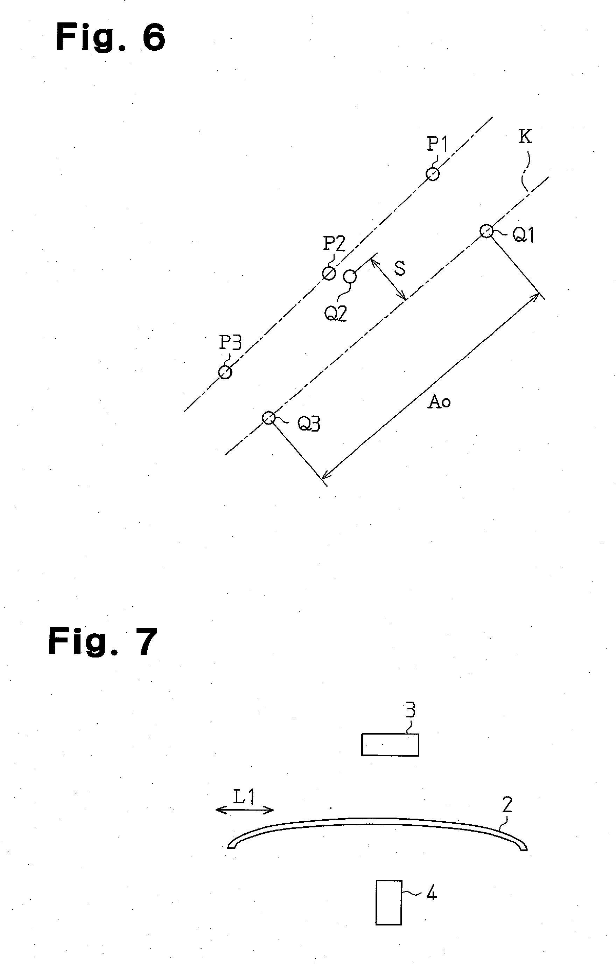

Fig. 6 shows the captured image P1 and the captured image Q1 of the LED 10 located at coordinates (1, 3) and the captured image P3 and the captured image Q3 of the LED 10 located at coordinates (3, 1) next to each other. As shown in Fig. 6, the captured images P1, P2, and P3 are arranged along a hypothetical straight line inclined at an angle of 45 degrees. This is because the captured images P1, P2, and P3 are not formed through the glass panel 2 and are not affected by transmitted optical distortion that would be caused by the glass panel 2. Contrarily, the captured images Q1, Q2, and Q3 are not arranged on a hypothetical straight line inclined at an angle of 45 degrees. In detail, the captured image Q2 of the LED 10 located in the middle of the target mark T (the LED 10 at coordinates (2, 2)) is not arranged on a hypothetical straight line K linking the two captured images Q1 and Q3 of the two LEDs 10 positioned at the two ends of the target mark T (the LEDs 10 at coordinates (1, 3) and (3, 1). This indicates that an intersecting point of the line linking the CCD camera 4 and the LED 10 at coordinates (2, 2) with the glass panel 2 includes a transmitted optical distortion.

The computer 6 calculates the distance between the captured image Q2 and the hypothetical straight line K linking the captured images Q1 (P1) and Q3 (P3), that is, a deviation amount S, in accordance with the distortion calculation program code. The computer 6 calculates transmitted optical distortion amount R from the deviation amount S and the unit length Ao of the LEDs 10 using the formula

$$R = S / Ao.$$

The transmitted optical distortion amount R increases as the deviation amount S increases. The calculation of the transmitted optical distortion amount R for each LED 10 at different coordinates enables quantitative detection of the transmitted optical distortion on the glass panel 2. The computer 6 outputs the calculated transmitted optical distortion amount R on the monitor 18.

Next, a method for inspecting the transmitted optical distortion of the glass panel 2 with the transmitted optical distortion inspection apparatus 1 will be discussed.

First, the glass panel 2 is mounted on the panel holding frame 17. To prepare for the transmitted optical distortion detection, the positioning control unit 8 determines an automatic detection region for which the inspection is to be performed. In the detection region determination, the positions of the Y-movement frame 15 and the X-movement frame 16 with respect to the common base 11 are adjusted in a manner that at least one of the first to fourth observation zones G1 to G4 falls within the view of the CCD camera 4, and the Y-movement frame 15 and the X-movement frame 16 are fixed at the adjusted positions. In this state, the swivel mechanism 12a is driven to determine the pivot range of the CCD camera 4 and the range of rotation of the swing frame 14. The determined pivot ranges are input to the computer 6.

For example, the CCD camera 4 is manually pivoted about the Y-axis without pivoting the glass panel 2. In this state, the position of the CCD camera 4 is measured when the observation zone G4 at the upper side of the glass panel 2 falls within the view of the CCD camera 4 and when the observation zone G3 at the lower side of the glass panel 2 falls within the view of the CCD camera 4. The two measured positions are input into the computer 6 and stored in the memory 6a. The swing frame 14 is rotated manually. In this state, the position of the CCD camera 4 is measured when the observation zones G3 and G4 at the left side of the glass panel 2 fall within the view of the CCD camera 4 and when the observation zones G3 and G4 at the right side of the glass panel 2 fall within the view of the CCD camera 4. The two measured positions are input into the computer 6, and stored in the memory 6a. This completes the detection region determination.

Next, the target marks T are illuminated one after another (illumination process). The CCD camera 4 tracks each illuminated target mark T and captures an image of the illuminated target mark T (first imaging process). For example, the swivel mechanism 12a is controlled to position the CCD camera 4 in a manner that the target mark T formed by the three LEDs 10 located at coordinates (1, 3), (2, 2), and (3, 1) falls within the view of the CCD camera 4 through a predetermined one of the observation zones G1 to G4 on the glass panel 2. The target mark T is then selectively illuminated so that the CCD camera 4 captures an image of the target mark T.

The CCD camera 4 provides the image processing device 9 with an image signal G. The image processing device 9 processes the image signal G to generate a processed image signal SG indicating the center of gravity coordinates of the three LEDs 10 (image processing process). The computer 6 calculates the center of gravity coordinates for each LED 10 based on the processed image signal SG and stores the center of gravity coordinates for each LED 10 in the memory 6a.

Then, the target mark T formed by the three LEDs 10 located at coordinates (2, 3), (3, 2), and (4, 1) is illuminated. The swivel mechanism 12a is driven to so that the CCD camera 4 is oriented downward by a predetermined angle in correspondence with the grid interval of the LEDs 10. The CCD camera 4 then captures an image of the three illuminated LEDs 10. As described above, the computer 6 calculates the center of gravity coordinates of each LED 10 and stores the center of gravity coordinates of each LED 10 in the memory 6a.

Afterwards, the above operation is repetitively performed. After the CCD camera 4 captures an image of the target mark T including the three LEDs 10 located at coordinates (150, 1), (149, 2), and (148, 3) of the LED board 3, the CCD camera 4 is pivoted by the swivel mechanism 12a and oriented toward the target mark T at the highest position.

Subsequently, the swing frame 14 pivots along the rails 13, and the three LEDs 10 located at coordinates (1, 3), (2, 2), and (3, 1) are illuminated. Further, the CCD camera 4 captures an image of the target mark T, which includes the illuminated three LEDs 10, through another one of the observation zones. Afterwards, the imaging of the target marks T is performed at various positions for the observation zones G1 to G4 on the glass panel 2 through the same procedures as described above.

Next, a calibration measurement is performed by removing the glass panel 2 from the panel holding frame 17. During the calibration measurement, the same procedures as described are performed except in that the glass panel 2 is removed. The calibration measurement includes a process of illuminating target marks T one after another and a second imaging process of tracking and imaging an illuminated target mark T using the CCD camera 4. With this calibration measurement, captured images of the LEDs 10 are generated without any transmitted optical distortion. Further, a center of gravity coordinates for the LEDs 10 having no transmitted optical distortion are calculated and stored in the memory 6a.

The computer 6 calculates the deviation amount S of the captured image Q2 from the hypothetical straight line, which is inclined at 45 degrees and links the captured images Q1 (P1) and Q3 (P3), in accordance with the distortion calculation program code to calculate the transmitted optical distortion amount R (calculation process). The computer 6 compares the calculated transmitted optical distortion amount R with the threshold for the one of the observation zones G1 to G4 through which the captured image has been formed, which is stored in the memory 6a, and determines whether the transmitted optical distortion amount R is the threshold or less. When the transmitted optical distortion amount R exceeds the threshold at any point, the glass panel 2 has a large transmitted optical distortion at that point and is thus defective at that point. When the transmitted optical distortion amount R is the threshold or less, the glass panel 2 has a small transmitted optical distortion at that position and is thus not defective at that point. The inspection result is displayed on the monitor 18.

The same operations and calculations are repeated for each target mark T until the imaging is performed for the target mark T formed by the three LEDs 10 at the lowest position of the LED board 3, that is, the three LEDs 10 located at coordinates (150, 1), (149, 2), and (148, 3). After imaging the target mark T at the lowest position, the swivel mechanism 12a is driven to orient the CCD camera 4 toward the target mark T at the highest position. The swing frame 14 is pivoted along the rails 13. Then, the target mark T formed by the three LEDs 10 located at coordinates (1, 3), (2, 2), and (3, 1) is selectively illuminated. The illuminated target mark T is imaged by the CCD camera 4. Afterwards, the imaging of the LED 10 is performed in the same manner as described above. This completes the detection of the transmitted optical distortion amount R.

The preferred embodiment has the advantages described below.

(1) The LED board 3 includes the plurality of diagonal target marks T, each of which is formed by three LEDs 10 arranged on the straight line Lc inclined at 45 degrees. The glass panel 2 is arranged between the LED board 3 and the CCD camera 4. The diagonal target marks T are illuminated one after another, and the CCD camera 4 captures an image of an illuminated target mark T through a selected one of the observation zones G1 to G4 of the glass panel 2. Further, in a state in which the glass panel 2 is removed, the diagonal target marks T are illuminated one after another. The CCD camera 4 captures an image of each target mark T through the selected one of the observation zones G1 to G4. The transmitted optical distortion amount R is calculated based on the deviation amount S of the position of the image of the LED 10 in the middle of the target mark T from a line linking the images of the two LEDs 10 at the two ends of the target mark T. The calculated transmitted optical distortion amount R is compared with the threshold of the selected one of the observation zones G1 to G4 that is prestored in the memory 6a to determine whether the transmitted optical distortion amount R is the threshold or less. When the transmitted optical distortion amount R is greater than the threshold, the glass panel 2 has a large transmitted optical distortion at that point and is defective. When the transmitted optical distortion amount R is the threshold or less, the glass panel 2 has a small transmitted optical distortion at that point and is not defective.

The three LEDs 10 forming each target mark T are arranged on the straight line Lc inclined at 45 degrees. Thus, the imaging position of each LED 10 contains information on the distortion amount in the vertical direction (Z-direction) of the glass panel 2 and information on the distortion amount in the lateral direction (Y-direction) of the glass panel 2 at the same ratio. This eliminates the need for separately measuring and calculating the angle distortion amounts in the vertical and lateral directions of the panel as required in the prior art. Further, this eliminates the need for using a complex determination formula to calculate the transmitted optical distortion from the angle distortion amounts in the vertical and lateral directions. As a result, the preferred embodiment enables the transmitted optical distortion amount of the glass panel 2 to be easily calculated.

(2) In the preferred embodiment, the CCD camera 4 and the glass panel 2 are supported in a relatively movable manner on the table 5. In detail, the CCD camera 4 is supported on the camera platform 12, and its orientation in the Z-direction with respect to the glass panel 2 is changed by the motor M1. The glass panel 2 is pivoted about the CCD camera 4 by the motor M2. The computer 6 controls the driving of the motors M1 and M2 and automatically controls the position of the CCD camera 4 relative to each of the observation zones G1 to G4 of the glass panel 2. The positioning of the CCD camera 4 with respect to the observation zones G1 to G4 does not involve human errors. Thus, the transmitted optical distortion amount is calculated in a accurate and stable manner.

(3) In the preferred embodiment, the center of gravity coordinates of each illuminated LED 10 are obtained by the image processing device 9, which includes the conversion circuit 9a. Thus, even when the captured image of the LED 10 is not circular but oval, the imaging position of the oval captured image of the LED 10 is indicated using the center of gravity coordinates of the captured image of the LED 10. As a result, the transmitted optical distortion amount R of the glass panel 2 is detected with high accuracy.

(4) The target mark T is formed by the plurality of LEDs 10. The LEDs 10 are inexpensive. Thus, the target marks T are inexpensive. This lowers the manufacturing cost of the transmitted optical distortion inspection apparatus 1.

The preferred embodiment may be modified in the following forms.

The optical transparent panel 2 does not have to be a glass panel of an automobile and may be any kind of optical transparent panel, such as a transparent panel made of a synthetic resin material.

The calibration measurement may be performed before the imaging of the target marks T through the glass panel 2.

The computer 6 may integrally include the image processing device 9 and the CPU 6b.

In the preferred embodiment, the Y-movement frame 15 and the X-movement frame 16 are fixed at positions adjusted with respect to the common base 11, and the swivel mechanism 12a and the swing frame 14 are driven to change the position of the CCD camera 4 relative to the glass panel 2. Alternatively, as shown in Fig. 7, the swing frame 14 and the Y-movement frame 15 may be fixed at the positions adjusted with respect to the common base 11, the glass panel 2 may be held about orthogonal to the line linking the CCD camera 4 and the LED board 3 (that is, the optical axis of the CCD camera 4), and the Y-movement frame 15 and the swivel mechanism 12a may be driven to change the position of the CCD camera 4 relative to the glass panel 2.

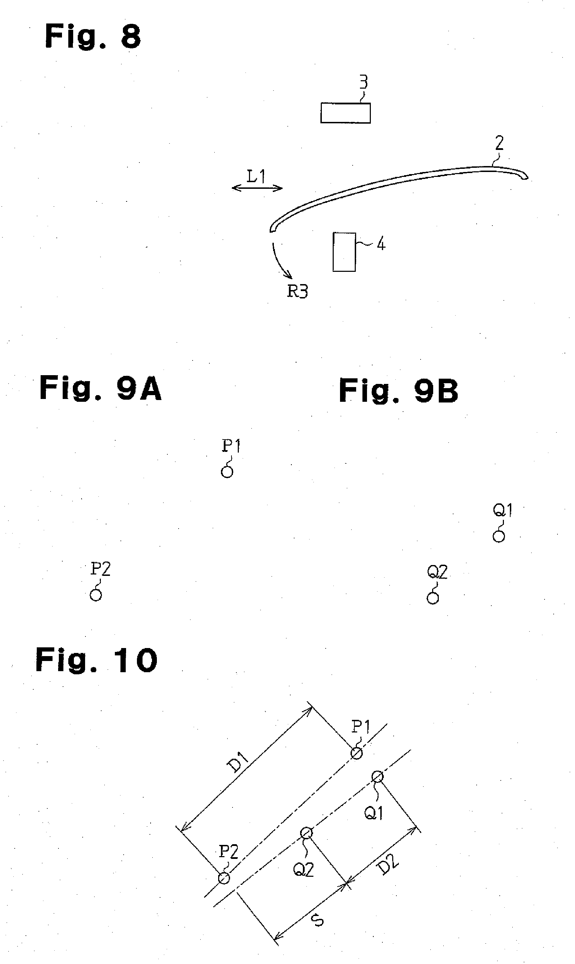

Further, as shown in Fig. 8, the swing frame 14 may be rotated to incline the glass panel 2 with respect to the line linking the CCD camera 4 and the LED board 3, and the swing frame 14 may be fixed at that position. Then, the Y-movement frame 15 and the swivel mechanism 12a may be driven to change the position of the CCD camera 4 relative to the glass panel 2.

When the glass panel 2 is inclined with respect to the LED 10, a captured image of the LED 10 is formed to have an oval shape. However, because the image processing device 9 uses the center of gravity coordinates of the captured image of the LED 10 to indicate the imaging position of the LED 10, the transmitted optical distortion of the glass panel 2 is detected with high sensitivity. Further, the deviation amount S is amplified by the refraction index of the tilted glass panel 2. As a result, the transmitted optical distortion of the glass panel 2 is detected with high sensitivity and high accuracy.

In the preferred embodiment, each target mark T is formed by the LEDs 10 (e.g., the LEDs 10 at coordinates (1, 3), (2, 2), and (3, 1)) arranged on the straight line inclined at 45 degrees. However, it is only required that each target mark T be formed by LEDs 10 arranged along a straight line. For example, each target mark T may be formed by LEDs 10 arranged on a horizontal straight line (e.g., the LEDs 10 at coordinates (1, 3), (1, 2), and (1, 1)), LEDs 10 arranged on a straight line inclined at an angle differing from 45 degrees (e.g., the LEDs 10 at coordinates (1, 3), (3, 2), and (5, 1)), or LEDs 10 arranged on a vertical straight line (e.g., the LEDs 10 at coordinates (1, 3), (2, 3), and (3, 3)). In this manner, by changing the angle of the target mark T, the transmitted optical distortion at various angles may be inspected.

In the preferred embodiment, each target mark T is formed by three LEDs 10. However, as shown in Fig. 9, each target mark T may be formed by two LEDs 10 arranged on a straight line. Fig. 9A shows an image of the two LEDs 10 obtained by illuminating the two LEDs 10 and forming an image of each LED 10 through the glass panel 2. Fig. 9B shows an image of the two LEDs 10 obtained by illuminating the two LEDs 10 and forming an image of each LED 10 without through the glass panel 2. In this case, the transmitted optical distortion amount R may be calculated from a difference (deviation amount S = D1 - D2) of a distance D1, which is taken between the center of gravity coordinates of the captured images of the two LEDs 10 captured without through the glass panel 2 (P1 and P2 in Fig. 10), and a distance D2, which is taken between the center of gravity coordinates of the captured images of the two LEDs 10 captured through the glass panel 2 (Q1 and Q2 in Fig. 10). The transmitted optical distortion amount R increases as the deviation amount S increases. Calculation of the transmitted optical distortion amount R at various positions of the observation zones G1 to G4 of the glass panel 2 enables quantitative detection of the transmitted optical distortion at various positions on the glass panel 2.

**Claims**

1. A transmitted optical distortion inspection apparatus that detects transmitted optical distortion in a plurality of small regions defined on an optical transparent panel, the apparatus comprising:

   a display device including a plurality of target marks spaced from one another by an equal interval, with each target mark being formed by a plurality of light emitting points arranged along a straight line, wherein the display device sequentially illuminates each target mark;
   an imaging device that tracks an illuminated one of the target marks and captures an image of the illuminated target mark;
   an image processing device that processes the image captured by the imaging device; and
   a calculation device that calculates a transmitted optical distortion degree of the panel from an image of each target mark captured without through the panel and an image of each target mark through the panel based on differences between imaging positions of each light emitting point.

2. The transmitted optical distortion inspection apparatus according to claim 1, wherein the plurality of light emitting points forming each target mark are three light emitting diodes arranged along the straight line.

3. The transmitted optical distortion inspection apparatus according to claim 1, wherein the plurality of light emitting points forming each target mark are two light emitting diodes arranged along the straight line.

4. The transmitted optical distortion inspection apparatus according to any one of claims 1 to 3, wherein the plurality of light emitting points forming each target mark are arranged along a straight line inclined at an angle of 45 degrees.

5. The transmitted optical distortion inspection apparatus according to any one of claims 1 to 3, wherein the panel is pivotally supported about the imaging device.

6. The transmitted optical distortion inspection apparatus according to any one of claims 1 to 4, wherein the panel is maintained in a state about orthogonal to an optical axis of the imaging device and supported to be movable in a direction intersecting the optical axis.

7. The transmitted optical distortion inspection apparatus according to any one of claims 1 to 4, wherein the panel is maintained in a state inclined relative to an optical axis of the imaging device and supported to be movable in a direction intersecting the optical axis.

8. The transmitted optical distortion inspection apparatus according to any one of claims 1 to 7, wherein the panel is a glass panel for an automobile, and the imaging device is arranged at a position corresponding to an eyepoint of a driver of the automobile.

9. The transmitted optical distortion inspection apparatus according to any one of claims 1 to 8, wherein the image processing device includes a conversion means for converting into a center of gravity coordinates with an image of each light emitting point.

10. The transmitted optical distortion inspection apparatus according to any one of claims 1 to 9, wherein each light emitting point is a light emitting diode.

11. A transmitted optical distortion inspection method for detecting a transmitted optical distortion in a plurality of small regions defined on an optical transparent panel, the method comprising:

a step of sequentially illuminating a plurality of target marks spaced from one another by an equal interval, with each target mark being formed by a plurality of light emitting points arranged along a straight line;
a first imaging step of imaging an illuminated target mark through the panel;
a second imaging step of imaging an illuminated target mark without through the panel;
an image processing step of processing each of the images captured in the first and second imaging steps; and
a calculation step of comparing an imaging position of each light emitting point in each target mark imaged without through the panel and an imaging position of each light emitting point in each target mark imaged through the panel to calculate the transmitted optical distortion from a difference between the imaging positions of the light emitting points.

12. A transmitted optical distortion inspection apparatus for detecting a transmitted optical distortion in an optical transparent panel, the apparatus comprising:

a display device, including a plurality of diagonal target marks, for selectively illuminating the target marks, wherein each of the target marks is formed by a plurality of light emitting points arranged at a constant pitch along a straight line;
an imaging device that images an illuminated one of the target marks and generates an image signal;
a table for holding the optical transparent panel between the display device and the imaging device;
an image processing device that processes the image signal and determining the position of each light emitting point in an image of each target mark; and
a computer that calculates, based on the position of each light emitting point, distance from a hypothetical straight line linking images of light emitting points arranged at two ends of each target mark to an image of a light emitting point located between the light emitting points arranged at the two ends, and calculates a transmitted optical distortion degree based on the calculated distance.

13. The transmitted optical distortion inspection apparatus according to claim 12, wherein each illuminated light emitting point is imaged as a circular or oval light emitting region, the image processing device calculates a center of gravity position of an image of each light emitting point in an image of each target mark, the computer calculates the distance from a hypothetical straight line linking center of gravity positions of images of light emitting points arranged at two ends of each target mark to a center of gravity position of an image of a light emitting point located between the light emitting points arranged at the two ends to calculate the transmitted optical distortion degree based on the distance.

14. The transmitted optical distortion inspection apparatus according to claim 13, wherein the computer calculates the transmitted optical distortion degree of the panel using the formula

$$R = S \ / \ Ao,$$

where R represents transmitted optical distortion amount, S represents said distance, and Ao represents distance between the center of gravity positions of the light emitting points arranged at the two ends.

15. The transmitted optical distortion inspection apparatus according to claim 14, wherein the panel includes a plurality of small regions, the computer includes a memory storing a threshold set for each small region, and the computer determines whether a transmitted optical distortion amount and a transmitted optical distortion at each measurement point are the threshold or less.

16. The transmitted optical distortion inspection apparatus according to claim 12, further comprising:

> motors for respectively moving the imaging device and the table in a manner that a line linking the imaging device and the display device extends through various positions on the optical transparent panel.

17. The transmitted optical distortion inspection apparatus according to claim 12, wherein the optical transparent panel includes a curved portion, and the transmitted optical distortion inspection apparatus inspects for transmitted optical distortion of the curved portion.

Fig. 1

# Fig. 2

# Fig. 3A

# Fig. 3B

# Fig. 4

```
                                    7a
                            ┌──────────────┐
                            │Operation Unit│
                            └──────┬───────┘
   3                               │   7                        6
┌─────┐                            ▼                      ┌──────────────┐
│ooo  │──10              ┌──────────────┐  Sb             │         6a   │
│ooo  │                  │ LED Display  │◄────────────────│ ┌──────────┐ │
│ooo  │                  │ Control Unit │────────────────►│ │ Memory   │ │
│ooo  │                  │              │                 │ └──────────┘ │
│ooo  │◄─────────────────│              │                 │ ┌──────────┐ │
│ooo  │                  └──────────────┘                 │ │   CPU    │ │
└─────┘                                                   │ └──────────┘ │
                                                          │         6b   │
   5                        8            Sa               │              │
┌─────┐                 ┌──────────────┐                 │  Computer    │
│Table│                 │ Positioning  │◄────────────────└──────────────┘
└──┬──┘  M2      S2      │ Control Unit │
   │  ┌──┐              ►│              │◄────
┌──┴──┐ │        ┌───────│              │    
│Motor│◄┘    S1  │       └──────────────┘
└──┬──┘  M1 ┌─────┘           9
   │  ┌──┐  │          ┌──────────────┐
┌──┴──┐ │  │          │   Image      │  SG
│Motor│◄┘  │          │ Processing   │──────────
└──┬──┘    │          │  Device      │
   │       │    G     │ ┌──────────┐ │
   │       └──────────│►│Conversion│ │──9a
┌──┴────────┐         │ │ Circuit  │ │
│CCD Camera │─────────│ └──────────┘ │
└───────────┘   4     └──────────────┘
```

# Fig. 5A            Fig. 5B

P1
○

P2
○

P3
○

Q1
○

Q2
○

Q3
○

# Fig. 6

P1
K
P2
Q1
S
Q2
P3
Ao
Q3

# Fig. 7

3
L1
2
4

# Fig. 8

# Fig. 9A

# Fig. 9B

# Fig. 10

## INTERNATIONAL SEARCH REPORT

| International application No. |
| --- |
| PCT/JP2006/302004 |

A. CLASSIFICATION OF SUBJECT MATTER
*G01B11/24*(2006.01), *G01N21/896*(2006.01)

According to International Patent Classification (IPC) or to both national classification and IPC

B. FIELDS SEARCHED

Minimum documentation searched (classification system followed by classification symbols)
G01B11/00-11/30, G01N21/896

Documentation searched other than minimum documentation to the extent that such documents are included in the fields searched
Jitsuyo Shinan Koho       1922-1996   Jitsuyo Shinan Toroku Koho   1996-2006
Kokai Jitsuyo Shinan Koho  1971-2006   Toroku Jitsuyo Shinan Koho   1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 5-312529 A (Nippon Sheet Glass Co., Ltd.), 22 November, 1993 (22.11.93), Full text; all drawings & US 5446536 A          & CA 2095303 A | 1-17 |
| A | JP 7-128242 A (Nippon Sheet Glass Co., Ltd.), 19 May, 1995 (19.05.95), Full text; all drawings (Family: none) | 1-17 |
| A | JP 2003-172713 A (Asahi Glass Co., Ltd.), 20 June, 2003 (20.06.03), Full text; all drawings (Family: none) | 1-17 |

☐ Further documents are listed in the continuation of Box C.          ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 05 April, 2006 (05.04.06) | 18 April, 2006 (18.04.06) |

| Name and mailing address of the ISA/ | Authorized officer |
| --- | --- |
| Japanese Patent Office | |
| Facsimile No. | Telephone No. |

Form PCT/ISA/210 (second sheet) (April 2005)

**EP 1 857 773 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3083641 B

**Non-patent literature cited in the description**

- TOYOTA Technical Review. July 1993, vol. 43